# EUROPÄISCHE PATENTSCHRIFT

(11) **EP 0 839 299 B1**
(45) Veröffentlichungstag und Bekanntmachung des Hinweises auf die Patenterteilung: **26.09.2001**
(21) Anmeldenummer: 96922874.1
(22) Anmeldetag: 21.06.1996
(51) Int. Cl.: F16M 1/00

(54) **VORRICHTUNG ZUM ANBRINGEN EINES FRONTRAHMENS AN EINEM GEHÄUSE**
DEVICE FOR FITTING A FRONT FRAME TO A HOUSING
DISPOSITIF DE FIXATION D'UN CADRE FRONTAL SUR UN BOITIER

(30) Priorität: 15.07.1995 DE 19525876
(43) Veröffentlichungstag der Anmeldung: 06.05.1998
(73) Patentinhaber: Rittal-Werk Rudolf Loh GmbH & Co. KG, 35745 Herborn (DE)
(72) Erfinder: MÜNCH, Udo, D-35764 Sinn (DE); NEUHOF, Markus, D-35630 Ehringshausen-Niederlemp (DE); ROOT, Paul, D-35080 Bad Endbach (DE)
(74) Vertreter: Fleck, Hermann-Josef, Dr.-Ing.
(86) Internationale Anmeldenummer: EP9602696
(87) Internationale Veröffentlichungsnummer: WO9704270

(56) Entgegenhaltungen:
- DE-A- 3 538 188
- GB-A- 1 489 278
- US-A- 4 958 259

## Beschreibung

Die Erfindung betrifft eine Vorrichtung zum Anbringen eines Frontrahmens an die offene Frontseite eines aus Wandelementen zusammengesetzten Gehäuses, wobei die Wandelemente im Bereich der Frontseite zwei senkrecht zueinander stehende Wandabschnitte aufweisen von denen einer einen offenen L-Steg trägt.

Eine solche Vorrichtung ist aus der GB 1 489 278 bekannt. Das eine Wandelement weist dabei eine Steckaufnahme auf, in die eine Platte eingeschoben werden kann. Das andere Wandelement trägt zwei, zueinander parallel beabstandete Schenkel, die einander zugekehrt Rastnasen aufweisen. In diese Rastnasen können Rahmenprofile des Frontrahmens eingeklipst werden. Das Rahmenprofil ist dabei zwischen den Schenkeln gehalten. An der dem Betrachter zugekehrten Frontseite entsteht eine Nut zwischen dem Rahmenprofil und dem Schenkel, der als störend empfunden wird.

Bei bekannten Geräten dieser Art werden die Frontrahmen mit den Stirnseiten der Wandelemente verschraubt. Dabei ergibt sich ein erheblicher Teile- und Montageaufwand und außerdem sind die Verbindungsstellen an der Sichtseite des Frontrahmens einsehbar.

Es ist Aufgabe der Erfindung, eine Vorrichtung der eingangs erwähnten Art zu schaffen, mit der auf einfache Weise die offene Frontseite des Gehäuses schnell mit einem Frontrahmen abgeschlossen werden kann, wobei die Verbindungsstellen auf der Sichseite des Frontrahmens nicht einsehbar sind.

Diese Aufgabe wird nach der Erfindung dadurch gelöst, daß an den zweiten Wandabschnitt eine unter 45° geneigte Aufnahmenut angeformt ist, daß der andere Wandabschnitt der Aufnahmenut abgekehrt den offenen L-Steg trägt, daß Rahmenschenkel mit einem runden Lagersteg in die L-Stege der Wand-elemente eingehängt und durch Verschwenkungen mit komplementär ange-formten Aufnahmenuten mit den Aufnahmenuten der Wandelemente zur Deckung gebracht sind, daß in die durch die beiden Aufnahmenuten von Wandelement und Rahmenschenkel gebildeten geschlossenen Aufnahmen Sicherungselemente eingeführt sind, die die Rahmenschenkel an den Wand-elementen festlegen, und daß Eckstücke stirnseitig mit den durchgehenden Schraubaufnahmen versehen und mit den Wandelementen verbundenen Rahmenschenkeln verschraubt sind um den Frontrahmen zu vervollständigen.

Die Rahmenschenkel des Frontrahmens werden mit ihren Lagerstegen in die L-Stege der Wandelemente eingehängt, verschwenkt und mit den Sicherungselementen an den Wandelementen des Gehäuses festgelegt. Die Ecken werden mit den Eckstücken ausgefüllt, die mit den anstoßenden Rahmenschenkeln verschraubt werden. Die Befestigungsschrauben sind dabei in der Ebene der Frontseite ausgerichtet und daher bildet die Sichtweise des Frontrahmens eine geschlossene Fläche.

Die Verteilung der Aufnahmenuten, des Lagersteges und des L-Steges kann nach einer Ausgestaltung so vorgenommen sein, daß die halbkreisförmige Aufnahmenut des Wandelementes an dem im Bereich der Außenseite des Wandelementes liegenden Wandabschnitt angeformt und zur Rückseite des Gehäuses hin offen ist und daß der L-Steg an dem zur Frontseite parallelen Wandabschnitt des Wandelementes angeformt und zur Öffnung der Frontplatte hin offen ist.

Die Verteilung kann jedoch auch so vorgenommen sein, daß die halbkreisförmige Aufnahmenut und der L-Steg an den Wandabschnitten vertauscht angebracht sind, wobei der L-Steg zur Rückseite des Gehäuses hin und die Aufnahmenut zur Öffnung der Frontseite hin offen sind. Dabei unterscheiden sich die beiden Ausgestaltungen in der Schwenkrichtung der Rahmenschenkel zum Herstellen der Montagestellung.

Für die Ausgestaltung des Frontrahmens ist vorgesehen, daß die Rahmenschenkel als Hohlprofilabschnitte mit zwei parallelen Wänden ausgebildet sind, wobei eine Wand mit dem Lagersteg bzw. der Aufnahmenut den zur Frontseite parallelen Wandabschnitt des zugehörigen Wandelementes zumindest teilweise überdeckt und wobei die andere Wand hinter der Aufnahmenut bzw. des L-Steges sich bis zur Außenseite des Wandelementes erstreckt.

Die Schraubaufnahme der Rahmenschenkel ist vorzugsweise mit einem Längsschlitz versehen und über Stege mit den beiden Wänden des Rahmenschenkels verbunden.

Die Schwenklagerung des Rahmenschenkels am Wandelement ist nach einer Ausgestaltung so ausgeführt, daß der runde Lagersteg über einen Verbindungssteg mit der zugekehrten Wand des Rahmenschenkels verbunden ist, wobei der Verbindungssteg senkrecht zur Wand steht und den L-Steg des Wandelementes überbrückt.

Die Aufnahmenut am Rahmenschenkel ist vorzugsweise so ausgeführt, daß die halbkreisförmige Aufnahmenut im Endbereich einer Wand des Rahmenschenkels angeformt ist, unter 45° zu dieser steht und mit der offenen Seite zu der anderen, parallelen Wand des Rahmenschenkels gerichtet ist. Aus Stabilitätsgründen ist dabei zusätzlich vorgesehen, daß die Aufnahmenut der einen Wand über einen Steg mit der anderen Wand verbunden ist.

Damit der Frontrahmen das Gehäuse an der offenen Frontseite abdeckt, sieht eine Ausgestaltung vor, daß die Rahmenschenkel über die Außenseiten der Wandelemente vorstehen.

Das Anbringen der Eckstücke wird dadurch erleichtert, daß die Eckstücke an den beiden senkrecht zueinander stehenden Verbindungsseiten mit Fixieransätzen versehen sind, die in Hohlräume der als Hohlprofilabschnitte ausgebildeten Rahmenschenkel einer Ecke des Frontrahmens eingeführt sind.

Damit in den Frontrahmen z.B. eine die offene Seite verschließende Frontplatte oder dgl. eingesetzt werden kann, sieht eine Ausgestaltung vor, daß die parallel zu der offenen Frontseite ausgerichteten Wandabschnitte der Wandelemente innerhalb des Frontrahmens einen Auflagesteg bilden, der mit Befestigungsaufnahmen oder einer Befestigungsnut versehen ist.

Die Erfindung wird anhand eines in den Zeichnungen dargestellten Ausführungsbeispiels näher erläutert. Es zeigen:
- Fig. 1: eine Teilansicht, die das Einhängen eines Rahmenschenkels des Frontrahmens am zugekehrten Wandelement erkennen läßt,
- Fig. 2: eine Teilansicht des eingehängten Rahmenschenkels beim Verschwenken,
- Fig. 3: eine Teilansicht, die den am Wandelement mittels Sicherungselement festgelegten Rahmenschenkel erkennen läßt, und
- Fig. 4: in perspektivischer Ansicht einen Eckbereich des Gehäuses mit den festgelegten Rahmenschenkeln und dem anzubringenden Eckstück in der Montagestellung.

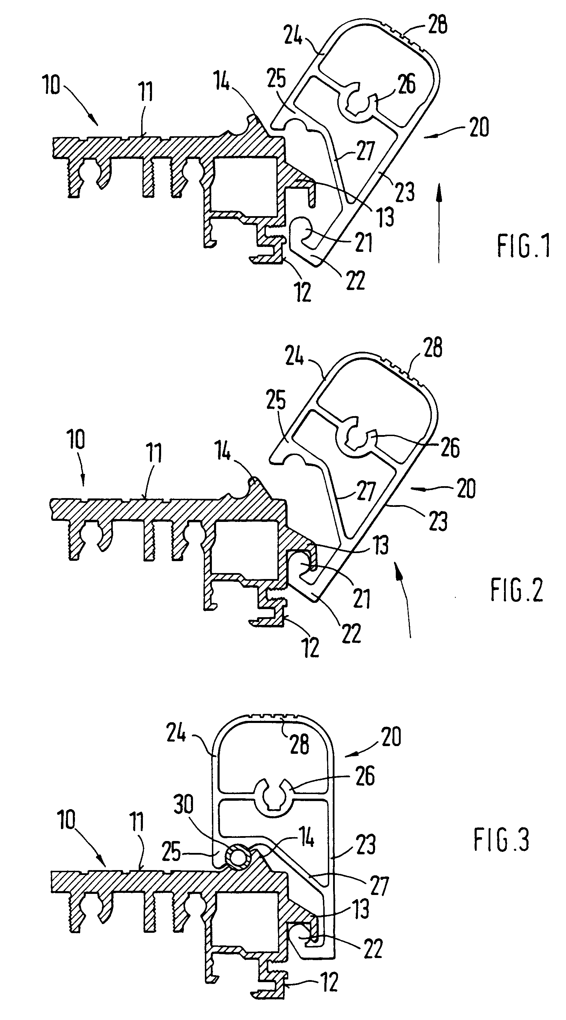

Anhand der Fig. 1 bis 3 wird die Anbringung eines Rahmenschenkels 20 eines Frontrahmens an die der offenen Frontseite eines aus Wandelementen 10 zusammengesetzten Gehäuses erläutert.

Das Wandelement 10 hat einen im Bereich der Außenseite liegenden Wandabschnitt 11 und einen zur Frontseite parallelen Wandabschnitt 12. Am Wandabschnitt 11 ist eine halbkreisförmige Aufnahmenut 14 angeformt, die sich über die gesamte Breite des Wandelementes 10 erstreckt. Diese Aufnahmenut 14 ist etwa 45° zum Wandabschnitt 11 geneigt und zur Rückseite des Wandelementes 10 hin offen. Am Wandabschnitt 12 ist ein durchgehender L-Steg 13 angeformt, der zu der Öffnung der Frontseite hin offen ist. Die angeformte Aufnahmenut 14 und der angefomte L-Steg 13 werden zum Festlegen eines als Hohlprofilabschnitt ausgebildeten Rahmenschenkels 20 verwendet, der sich ebenfalls über die gesamte Breite des Wandelementes 10 erstreckt.

Der Rahmenschenkel 20 weist zwei parallele Wände 23 und 24 auf, die über einen Abschnitt 28 miteinander verbunden sind. Die Wand 23 bildet die Sichtseite des Frontrahmens und trägt am unteren Ende einen durchgehenden, im Querschnitt runden Lagersteg 21. Dieser Lagersteg 21 steht über einen Verbindungssteg 22 mit dem unteren Ende zur Wand 23 in Verbindung. Der Verbindungssteg 22 steht senkrecht zur Wand 23 und ist so bemessen, daß bei in den L-Steg 13 eingehängtem Lagersteg 21 der L-Steg 13 überbrückt ist und die Wand 23 vertikal gestellt werden kann. Die gegenüberliegende Wand 24 ist kürzer und trägt am unteren Ende eine zur Aufnahmenut 14 des Wandelementes 10 komplementäre Aufnahmenut 25, die ebenfalls im Winkel von 45° zu der Wand 24 steht. Die Aufnahmenut 25 ist über einen Steg 27 mit der Wand 23 verbunden. Die Wand 24 ist so bemessen, daß bei vertikal gestelltem Rahmen-schenkel 20 seine Aufnahmenut 25 mit der Aufnahmenut 14 des Wand-elementes 10 zur Deckung kommt und eine geschlossene Aufnahme für ein Sicherungselement 30 bildet.

Wie Fig. 1 zeigt, wird der Rahmenschenkel 20 in Schrägstellung mit dem Lagersteg 21 in den L-Steg 13 des Wandelementes 10 eingeführt und so eine Schwenklagerung des Rahmenschenkels 20 am Wandelement 10 erhalten.

Wie Fig. 2 zeigt, kann der Rahmenschenkel 20 dann in Richtung zum Wandelement 10 eingeschwenkt werden, bis die Aufnahme mit 25 an der Wand 24 mit der Aufnahmenut 14 am Wandabschnitt 11 des Wandelementes 10 zur Deckung kommt. Beide Aufnahmenuten 14 und 25 bilden dann eine im Querschnitt runde Aufnahme, wie Fig. 3 zeigt. In diese Aufnahme wird ein rundes Sicherungselement 30 eingeschoben. Der Rahmenschenkel 20 kann dann nicht mehr vom Wandelement 10 abgeschwenkt werden und ist fest mit dem Wandelement 10 verbunden. Dabei reicht die Wand 24 des Rahmenschenkels 20 bis zum Wandabschnitt 11 des Wandelementes 10.

Etwa im Zentrum des hohlen Rahmenschenkels 20 ist eine mit Längsschlitz versehene durchgehende Schraubaufnahme 26 eingeformt, die mit Stegen an den Wänden 23 und 24 angebunden ist.

Die Aufnahmenut 14 und der L-Steg 13 können am Wandelement 10 auch vertauscht angeformt sein. Beim Anbringen des Rahmenschenkels 20 am Wandelement 10 ändert sich die Schrägstellung und die Schwenkrichtung des Rahmenschenkels 20.

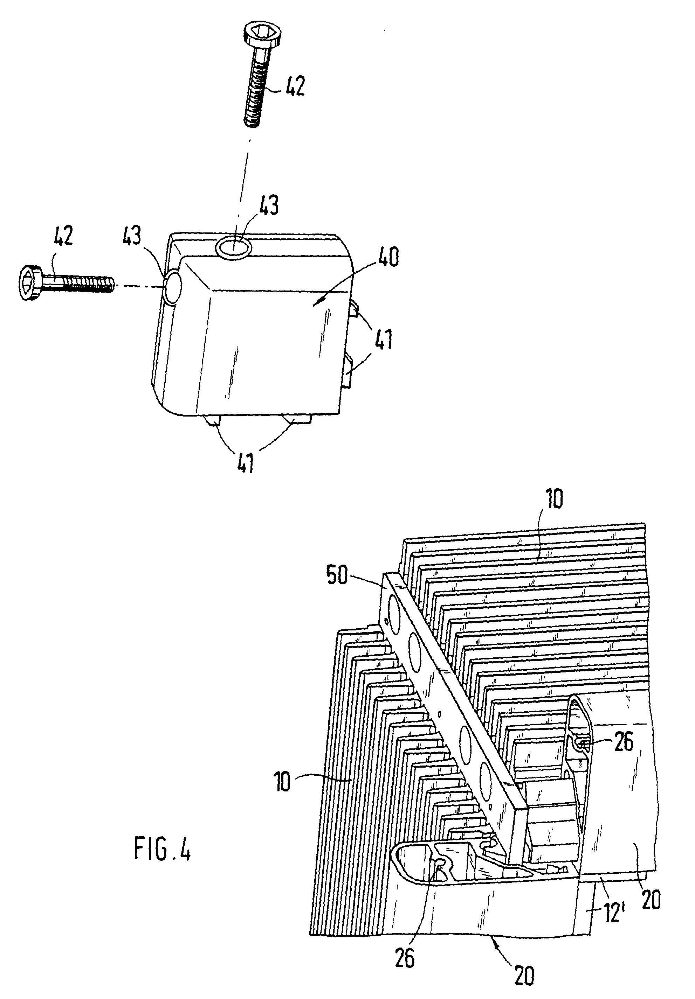

In Fig. 4 ist in einer Teilansicht eine Gehäuseecke dargestellt. Die beiden senkrecht aufeinanderstoßenden Wandelemente 10 sind mittels einer Leiste 50 miteinander verbunden, die einstückig an dem Wandelement angeformt ist. Die Vorderkanten der beiden Wandelemente 10 tragen je einen Rahmenschenkel 20. Mit Hilfe eines Eckstückes 40 wird der Frontrahmen vervollständigt. Dieses Eckstück 40 ist im Querschnitt an den Querschnitt der Rahmenschenkel 20 angepaßt, so daß es an die senkrecht zueinander stehenden Stirnseiten der Rahmenschenkel 20 angefügt werden kann.

Das Anfügen erfolgt diagonal, wobei Zentrieransätze 41 der beiden Seiten des Eckstückes 40 in Hohlräume der Rahmenschenkel 20 eingeführt werden. Das Eckstück 40 wird dabei so positioniert, daß die in Schraubhülsen 43 eingeführten und gehaltenen Befestigungsschrauben 42 in die Schraubaufnahmen 26 der Rahmenschenkel 20 eingeschraubt werden können. Alle vier Ecken werden mit derartigen Eckstücken 40 ausgefüllt, so daß ein geschlossener Frontrahmen ohne sichtbare Befestigungsstellen auf der Sichtseite entsteht.

Beim Ausführungsbeispiel ragt der Wandabschnitt 12 der Wandelemente 10 der Öffnung der Frontseite zugekehrt über den Frontrahmen hinaus und bildet einen umlaufenden Auflagesteg 12', wie aus Fig. 4 zu ersehen ist. Der Auflagesteg 12' kann als Anschlag für eine Tür oder für eine Frontplatte verwendet werden.

## Patentansprüche

1. Vorrichtung zum Anbringen eines Frontrahmens an die offene Frontseite eines aus Wandelementen zusammengesetzten Gehäuses, wobei die Wandelemente im Bereich der Frontseite zwei senkrecht zueinander stehende Wandabschnitte aufweisen, von denen einer einen offenen L-Steg trägt,
**dadurch gekennzeichnet,**
**daß** an den zweiten Wandabschnitt (11) eine unter 45° geneigte Aufnahmenut (14) angeformt ist,
daß der andere Wandabschnitt (12) der Aufnahmenut (14) abgekehrt den offenen L-Steg (13) trägt,
daß Rahmenschenkel (20) mit einem runden Lagersteg (21) in die L-Stege (13) der Wandelemente (10) eingehängt und durch Verschwenkungen mit komplementär angeformten Aufnahmenuten (25) mit den Aufnahmenuten (14) der Wandelemente (10) zur Deckung gebracht sind,
daß in die durch die beiden Aufnahmenuten (14,25) von Wandelement (10) und Rahmenschenkel (20) gebildeten geschlossenen Aufnahmen Sicherungselemente (30) eingeführt sind, die die Rahmenschenkel (20) an den Wandelementen (10) festlegen, und
daß Eckstücke (40) stirnseitig mit den durchgehenden Schraubaufnahmen (26) versehen und mit mit den Wandelementen (10) verbundenen Rahmenschenkeln (20) verschraubt sind, um den Frontrahmen zu vervollständigen.

2. Vorrichtung nach Anspruch 1,
**dadurch gekennzeichnet,**
**daß** die halbkreisförmige Aufnahmenut (14) des Wandelementes (10) an dem im Bereich der Außenseite des Wandelementes (10) liegenden Wandabschnittes (11) angeformt und zur Rückseite des Gehäuses hin offen ist, und
daß der L-Steg an dem zur Frontseite parallelen Wandabschnitt (12) des Wandelementes (10) angeformt und zur Öffnung der Frontseite hin offen ist.

3. Vorrichtung nach Anspruch 2,
**dadurch gekennzeichnet,**
**daß** die halbkreisförmige Aufnahmenut (14) und der L-Steg (13) an den Wandabschnitten (11,12) vertauscht angebracht sind, wobei der L-Steg zur Rückseite des Gehäuses hin und die Aufnahmenut zur Öffnung der Frontseite hin offen sind.

4. Vorrichtung nach einem der Ansprüche 1 bis 3,
**dadurch gekennzeichnet,**
**daß** die Rahmenschenkel (20) als Hohlprofilabschnitte mit zwei parallelen Wänden (23,24) ausgebildet sind, wobei eine Wand (23) mit dem Lagersteg (21) bzw. der Aufnahmenut den zur Frontseite parallelen Wandabschnitt (12) des zugehörigen Wandelementes (10) zumindest teilweise überdeckt und wobei die andere Wand (24) hinter der Aufnahmenut (14) bzw. des L-Steges sich bis zur Außenseite des Wandelementes (10) erstreckt.

5. Vorrichtung nach einem der Ansprüche 1 bis 4,
**dadurch gekennzeichnet,**
**daß** die Schraubaufnahme (26) mit Längsschlitz versehen und über Stege mit den beiden Wänden (23,24) des Rahmenschenkels (20) verbunden ist.

6. Vorrichtung nach einem der Ansprüche 1 bis 5,
**dadurch gekennzeichnet,**
**daß** der runde Lagersteg (21) über einen Verbindungssteg (22) mit der zugekehrten Wand (23) des Rahmenschenkels (20) verbunden ist, wobei der Verbindungssteg (22) senkrecht zur Wand (23) steht und den L-Steg (13) des Wandelementes (10) überbrückt.

7. Vorrichtung nach einem der Ansprüche 1 bis 6,
**dadurch gekennzeichnet,**
**daß** die halbkreisförmige Aufnahmenut (25) im Endbereich einer Wand (z.B. 24) des Rahmenschenkels (20) angeformt ist, unter 45° zu dieser steht und mit der offenen Seite zu der anderen, parallelen Wand (23) des Rahmenschenkels (20) gerichtet ist.

8. Vorrichtung nach Anspruch 7,
**dadurch gekennzeichnet,**
**daß** die Aufnahmenut (25) der einen Wand (z.B. 24) über einen Steg (27) mit der anderen Wand (z.B. 23) verbunden ist.

9. Vorrichtung nach einen der Ansprüche 1 bis 8,
**dadurch gekennzeichnet,**
**daß** die Rahmenschenkel (20) über die Außenseiten der Wandelemente (10) vorstehen.

10. Vorrichtung nach einem der Ansprüche 1 bis 9,
**dadurch gekennzeichnet,**
**daß** die Eckstücke (40) an den beiden senkrecht zueinander stehenden Verbindungsseiten mit Fixieransätzen (41) versehen sind, die in Hohlräume der als Hohlprofilabschnitte ausgebildeten Rahmenschenkel (10) einer Ecke des Frontrahmens eingeführt sind.

11. Vorrichtung nach einem der Ansprüche 1 bis 10,
**dadurch gekennzeichnet,**
**daß** die parallel zu der offenen Frontseite ausgerichteten Wandabschnitte (12) der Wandelemente (10) innerhalb des Frontrahmens einen Auflagesteg (12') bilden, der mit Befestigungsaufnahmen oder einer Befestigungsnut versehen ist.

## Claims

1. Device for attaching a front frame to an open front side of a housing composed of wall elements, the wall elements, in the region of the front side, having two wall sections which are perpendicular to one another and of which one carries an open L-web, **characterized in that** a location groove (14) inclined by 45° is integrally formed on the second wall section (11), in that the other wall section (12), remote from the location groove (14), carries the open L-web (13), in that frame legs (20) having a round bearing web (21) are put into the L-webs (13) of the wall elements (10) and are made to coincide with the location grooves (14) of the wall elements (10) by pivoting with location grooves (25) integrally formed in a complementary manner, in that securing elements (30) are inserted into the closed receptacles formed by the two location grooves (14, 25) of wall element (10) and frame leg (20), which securing elements (30) secure the frame legs (20) to the wall elements (10), and in that corner pieces (40) are provided at the end faces with the continuous screw receptacles (26) and are screwed to frame legs (20) connected to the wall elements (10) in order to complete the front frame.

2. Device according to Claim 1, **characterized in that** the semicircular location groove (14) of the wall element (10) is integrally formed on the wall section (11) lying in the region of the outside of the wall element (10) and is open towards the rear side of the housing, and in that the L-web is integrally formed on the wall section (12) of the wall element (10) parallel to the front side and is open towards the opening of the front side.

3. Device according to Claim 2, **characterized in that** the semicircular location groove (14) and the L-web (13) are attached to the wall sections (11, 12) in a transposed manner, the L-web being open towards the rear side of the housing and the location groove being open towards the opening of the front side.

4. Device according to one of Claims 1 to 3, **characterized in that** the frame legs (20) are designed as hollow profile sections having two parallel walls (23, 24), one wall (23), by means of the bearing web (21) or the location groove, at least partly covering that wall section (12) of the associated wall element (10) which is parallel to the front side, and the other wall (24) extending behind the location groove (14) or the L-web up to the outside of the wall element (10).

5. Device according to one of Claims 1 to 4, **characterized in that** the screw receptacle (26) is provided with an elongated slot and is connected via webs to the two walls (23, 24) of the frame leg (20).

6. Device according to one of Claims 1 to 5, **characterized in that** the round bearing web (21) is connected via a connecting web (22) to the facing wall (23) of the frame leg (20), the connecting web (22) being perpendicular to the wall (23) and bridging the L-web (13) of the wall element (10).

7. Device according to one of Claims 1 to 6, **characterized in that** the semicircular location groove (25) is integrally formed in the end region of a wall (e.g. 24) of the frame leg (20), is at 45° to this wall and is directed with the open side towards the other, parallel wall (23) of the frame leg (20).

8. Device according to Claim 7, **characterized in that** the location groove (25) of one wall (e.g. 24) is connected via a web (27) to the other wall (e.g. 23).

9. Device according to one of Claims 1 to 8, **characterized in that** the frame leg (20) projects beyond the outsides of the wall elements (10).

10. Device according to one of Claims 1 to 9, **characterized in that** the corner pieces (40) are provided with fixing extensions (41) on the two connecting sides perpendicular to one another, which fixing extensions (41) are inserted into cavities of the frame legs (10), designed as hollow profile sections, of a corner of the front frame.

11. Device according to one of Claims 1 to 10, **characterized in that** those wall sections (12) of the wall elements (10) which are oriented parallel to the open front side form a supporting web (12') inside the front frame, this supporting web being provided with fastening receptacles or a fastening groove.

## Revendications

1. Dispositif pour installer un cadre antérieur à la face antérieure ouverte d'une enceinte composée d'éléments de paroi, dans lequel les éléments de paroi présentent dans la région de la face antérieure deux portions de paroi placées perpendiculairement l'une à l'autre, dont l'une porte une nervure en L ouverte, **caractérisé en ce que**
- une rainure de réception (14) inclinée à 45° est façonnée sur la seconde portion de paroi (11),
- l'autre portion de paroi (12) porte la nervure en L ouverte (13) inversée par rapport à la rainure de réception (14),
- des côtés de cadre (20) sont suspendus par un bourrelet d'appui rond (21) dans les nervures en L (13) des éléments de paroi (10) et sont amenés par pivotements à recouvrir les rainures de réception (14) des éléments de paroi (10) avec des rainures de réception de forme complémentaire (25),
- des éléments de fixation (30) sont insérés dans les logements fermés formés par les deux rainures de réception (14, 25) de l'élément de paroi (10) et du côté de cadre (20), qui bloquent les côtés de cadre (20) sur les éléments de paroi (10), et
- des pièces d'angle (40) sont pourvues, dans les faces d'extrémité, des logements de vis traversants (26) et sont vissées aux côtés de cadre (20) assemblés aux éléments de paroi (10), afin de compléter le cadre antérieur.

2. Dispositif suivant la revendication 1, **caractérisé en ce que** la rainure de réception semi-circulaire (14) de l'élément de paroi (10) est façonnée sur la portion de paroi (11) située dans la région de la face extérieure de l'élément de paroi (10) et est ouverte en direction de la face postérieure de l'enceinte, et la nervure en L est façonnée sur la portion de paroi (12) de l'élément de paroi (10) parallèle à la face antérieure et est ouverte en direction de l'ouverture de la face antérieure.

3. Dispositif suivant la revendication 2, **caractérisé en ce que** la rainure de réception semi-circulaire (14) et la nervure en L (13) sont placées en position interchangée sur les portions de paroi (11, 12), la nervure en L étant ouverte en direction de la face postérieure de l'enceinte et la rainure de réception étant ouverte en direction de l'ouverture de la face antérieure.

4. Dispositif suivant l'une quelconque des revendications 1 à 3, **caractérisé en ce que** les côtés de cadre (20) sont constitués par des portions de profilés creux avec deux parois parallèles (23, 24), une paroi (23) avec le bourrelet d'appui (21) respectivement la rainure de réception recouvrant au moins en partie la portion de paroi (12) de l'élément de paroi correspondant (10) parallèle à la face antérieure et l'autre paroi (24) s'étendant derrière la rainure de réception (14) respectivement la nervure en L jusqu'à la face extérieure de l'élément de paroi (10).

5. Dispositif suivant l'une quelconque des revendications 1 à 4, **caractérisé en ce que** le logement de vis (26) est pourvu d'une fente longitudinale et est assemblé par des nervures aux deux parois (23, 24) du côté de cadre (20).

6. Dispositif suivant l'une quelconque des revendications 1 à 5, **caractérisé en ce que** le bourrelet d'appui rond (21) est assemblé par une nervure de liaison (22) à la paroi associée (23) du côté de cadre (20), la nervure de liaison (22) étant perpendiculaire à la paroi (23) et enjambant la nervure en L (13) de l'élément de paroi (10).

7. Dispositif suivant l'une quelconque des revendications 1 à 6, **caractérisé en ce que** la rainure de réception semi-circulaire (25) est façonnée dans la région d'extrémité d'une paroi (par exemple 24) du côté de cadre (20), est inclinée de 45° par rapport à celle-ci et est orientée avec son côté ouvert vers l'autre paroi parallèle (23) du côté de cadre (20).

8. Dispositif suivant la revendication 7, **caractérisé en ce que** la rainure de réception (25) d'une première paroi (par exemple 24) est assemblée par une nervure (27) à l'autre paroi (par exemple 23).

9. Dispositif suivant l'une quelconque des revendications 1 à 8, **caractérisé en ce que** les côtés de cadre (20) sont en saillie au-delà des faces extérieures des éléments de paroi (10).

10. Dispositif suivant l'une quelconque des revendications 1 à 9, **caractérisé en ce que** les pièces d'angle (40) sont pourvues, sur les deux faces d'assemblage disposées perpendiculairement l'une à l'autre, d'ergots de fixation (41) qui sont introduits dans des espaces creux des côtés de cadre (20), constitués par des portions de profilés creux d'un angle du cadre antérieur.

11. Dispositif suivant l'une quelconque des revendications 1 à 10, **caractérisé en ce que** les portions de paroi (12) des éléments de paroi (10) orientées parallèlement à la face antérieure ouverte forment à l'intérieur du cadré antérieur une nervure d'appui (12'), qui est pourvue de logements de fixation ou d'une rainure de fixation.
